(19) **Europäisches Patentamt**

**European Patent Office**

**Office européen des brevets**

(11) Veröffentlichungsnummer: **0 301 317 B1**

(12) **EUROPÄISCHE PATENTSCHRIFT**

(45) Veröffentlichungstag der Patentschrift: **10.06.92**

(51) Int. Cl.⁵: **G21C 17/00**

(21) Anmeldenummer: **88111244.5**

(22) Anmeldetag: **13.07.88**

(54) **Prüf-und Wartungsgerät für einen zylindrischen Behälter, insbesondere Reaktordruckbehälter.**

(30) Priorität: **28.07.87 DE 3724989**

(43) Veröffentlichungstag der Anmeldung:
**01.02.89 Patentblatt 89/05**

(45) Bekanntmachung des Hinweises auf die
Patenterteilung:
**10.06.92 Patentblatt 92/24**

(84) Benannte Vertragsstaaten:
**DE SE**

(56) Entgegenhaltungen:
**DE-A- 2 434 467**
**DE-A- 3 112 201**
**DE-A- 3 126 345**
**DE-A- 3 524 390**

(73) Patentinhaber: **SIEMENS AKTIENGESELL-
SCHAFT**
**Wittelsbacherplatz 2**
**W-8000 München 2(DE)**

(72) Erfinder: **Gugel, Georg**
**Fürtherstrasse 17**
**W 8501 Kalchreuth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Prüf- und Wartungsgerät für einen zylindrischen Behälter, insbesondere Reaktordruckbehälter.

Aus der DE-A 24 34 467 ist eine Inspektionseinrichtung zur Außenprüfung von Druckbehältern, insbesondere zur Ultraschallprüfung von Reaktordruckbehältern, bekannt, bei der im Inspektionsringraum zwischen Druckbehälter und der diesen umgebenden Wand in den vertikalen freien Gassen zwischen den Anschlußstutzen mindestens eine Längsschiene vorhanden ist, an der ein auf-und abwärts bewegbarer Manipulator zum Prüfen der Außenwand führbar ist. Der Manipulator trägt im Fall der Ultraschallprüfung eine entsprechende Anzahl von Ultraschallprüfköpfen und ist nicht nur längs vertikaler, sondern auch längs horizontaler Koordinaten bewegbar und auch in einer Winkellage zu diesen Koordinaten drehbar angeordnet. Hierzu sind entsprechende Vertikal-, Horizontal- und Dreh-Stellantriebe vorgesehen. Die jeweilige Position des Manipulators wird durch an ihm angebrachte Weggeber an eine Datenerfassungsanlage und/oder ein Steuerpult rückgemeldet. Es sind also außer den Signalleitungen für die Ultraschallprüfköpfe noch Stromversorgungs- und Steuerleitungen für die Stellantriebe mit ihren Schrittmotoren und Weggebern von einem Steuerpult, vorzugsweise mit Datenerfassungsanlage, an den Manipulator herangeführt. Werden die Prüfköpfe pneumatisch gegen ihre Prüfbahnen angedrückt, und wird mit Fließwasser-Ankoppelung gearbeitet, so kommen noch entsprechende Pneumatik- und Deionat-Leitungen hinzu. Der Manipulator wird durch einen Seiltrieb mittels eines an einer Plattform angeordneten Stellantriebs verfahren. Zur genauen Positionierung ist der Manipulator auch mit einem Stellantrieb ausgestattet, der über ein Getriebe mit Spindel eine unabhängige Positionierung des Manipulators ermöglicht. Bei dieser bekannten Inspektionseinrichtung erfolgt das Einfädeln und Herausnehmen des Manipulators über das obere Ende der Längsschiene von oben mit einem Gebäudekran oder einer anderen geeigneten Hubvorrichtung.

Aus der DE-A-3 524 390 ist eine Prüfund Wartungsanordnung bekannt, die ein Schienensegment enthält, das in Durchbrüche der Standzange des Behälters eingehängt werden kann. Dieses Schienensegment umschließt den Behälter nicht. Längs dieses Schienensegments ist eine Hubeinrichtung verfahrbar, in der ein senkrecht verschiebbarer Mast angeordnet ist. Die auf einen Basiswagen an einer horizontalen Führungsschiene des Mastes angeordneten Prüfsysteme sind nicht auf einem längs des Mastes verfahrbaren Schlitten angeordnet. Zur senkrechten Verschiebung der Prüfsysteme muß der komplette Mast senkrecht verschoben werden.

Am freien Ende des Mastes sind Elektromagnete angeordnet, mit denen das freie Ende des Mastes relativ zum Druckbehälter arretierbar ist. Der Hast kann somit nicht kontinuierlich in Umfangsrichtung des Behälters verfahren werden.

Der Erfindung liegt die Aufgabe zugrunde, ein Prüf- und Wartungsanordnung für einen zylindrischen Behälter anzugeben, bei dem das Umsetzen des Manipulators von einer Längsschiene auf eine andere entfallen kann und die Arbeitszeit verkürzt wird.

Diese Aufgabe wird erfindungsgemäß durch die im Anspruch 1 angegebenen Merkmale gelöst.

Die Erfindung ermöglicht es, den Behälter über seinen gesamten Umfang ohne Umsetzen des Manipulators unter Einsparung von Material und Arbeitszeit zu prüfen. Bei der Prüfung bzw. Wartung eines Reaktordruckbehälters können die einzelnen Einheiten, aus denen der Manipulator zusammengebaut wird, leicht durch das Mannloch eingebracht und mittels Schnellverbindungsgliedern zeitsparend montiert werden. Die erfindungsgemäße Anordnung kann auch nachträglich an einem Reaktordruckbehälter angebracht werden, ohne daß es hierzu eines besonderen Aufwandes bedarf. Darüber hinaus ist es in einfacher Weise möglich, die Anordnung vor einer Ultraschallprüfung zum Reinigen und Schleifen einer z.B. Ausblühungen aufweisenden Fläche einzusetzen.

Vorteilhafte Ausgestaltungen der Erfindung sind in den Unteransprüchen angegeben.

Die Erfindung ist anhand eines in der Figur dargestellten Ausführungsbeispiels näher erläutert. Darin zeigen:

FIG 1     einen Teilschnitt durch einen Reaktordruckbehälter, die den Reaktordruckbehälter umgebende Wärmedämmung sowie den biologischen Schild,

FIG 2     einen Querschnitt zu FIG 1,

FIG 3     eine Ansicht eines auf einer Ringschiene verfahrbaren Fahrzeuges mit Mast,

FIG 4     einen Querschnitt des Fahrgestells,

FIG 5     einen Querschnitt des Mastes und

FIG 6     die Führung des Mastes im Spalt zwischen Druckbehälter und Isolierung.

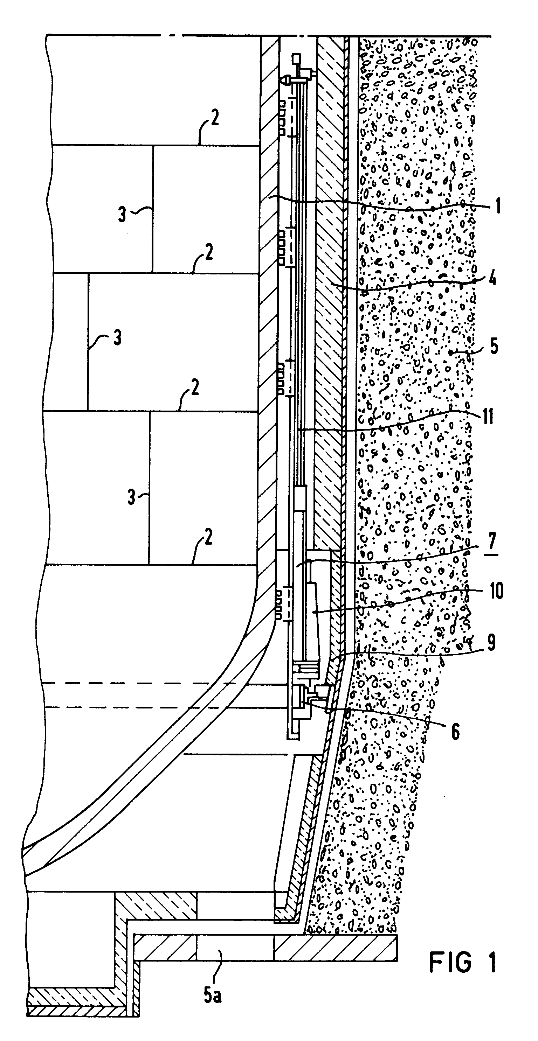

Der in FIG 1 dargestellte Rekatordruckbehälter 1 weist Querschweißnähte 2 und Längsschweißnähte 3 auf. Er ist mit einer Wärmeisolierung 4 versehen und innerhalb eines biologischen Schildes 5 angeordnet. Zur Prüfung und Wartung des Reaktordruckbehälters dient eine Anordnung, bei der eine den Reaktordruckbehälter in Bodennähe in gleichbleibenden Abstand umschließende Ringschiene 6 für einen Manipulator 7 befestigt ist.

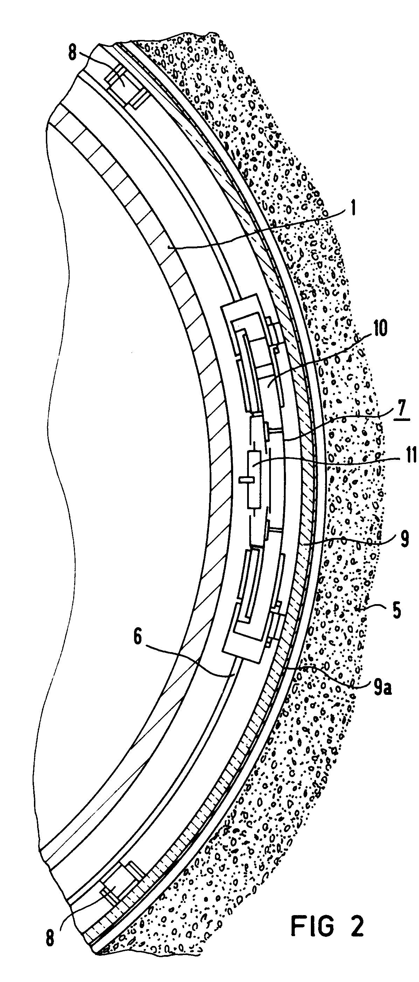

Wie FIG 2 zeigt, ist die Ringschiene 6 über Halterungen 8 an der metallischen Außenhaut 9a eines Isolationsringes 9 befestigt und bleibt nach der Montage fest eingebaut. Der eine mobile Prüf- bzw. Wartungsanordnung darstellende Manipulator 7 ist - wie noch näher ausgeführt wird - zur Prüfung aus leicht montierbaren Bauteilen bzw. Einheiten gebildet, die durch das Mannloch 5a in den Bodenkalottenraum unterhalb des Reaktordruckbehälters 1 eingebracht und auf der Ringschiene 6 zusammengebaut werden.

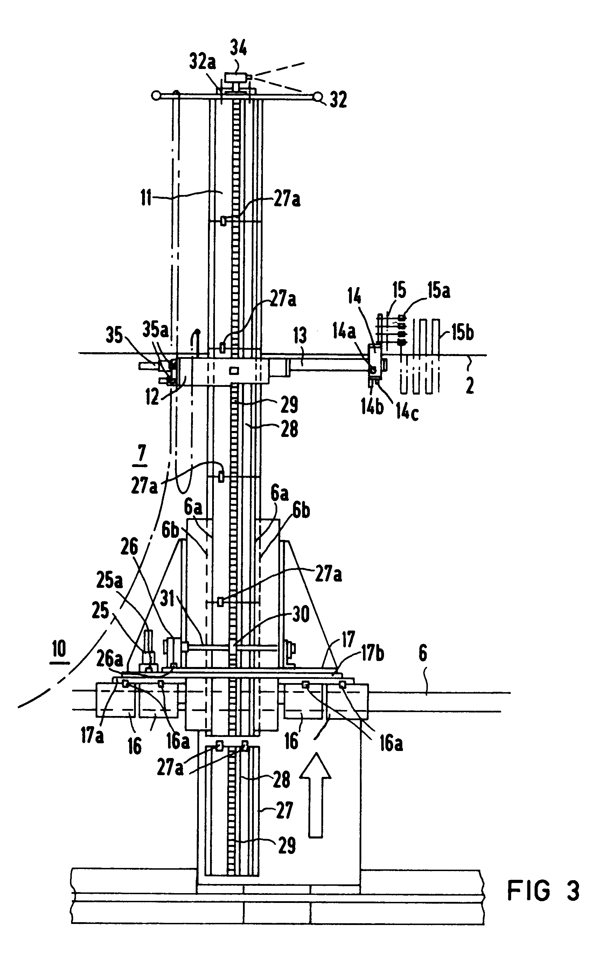

Aus den Figuren 2 und 3 ist zu ersehen, daß der Manipulator 7 im montierten Zustand ein längs der Ringschiene 6 verfahrbares Fahrzeug 10 aufweist, an dem ein in den Spalt zwischen dem Druckbehälter 1 und der Isolierung 4 ragender, flach ausgebildeter Mast 11 angeordnet ist.

Das Fahrwerk des Manipulators 7 weist mindestens zwei, im dargestellten Fall vier aufgleisbare Fahrgestelle 16 auf, die einzeln eingebracht und auf die Ringschiene 6 aufgegleist werden.

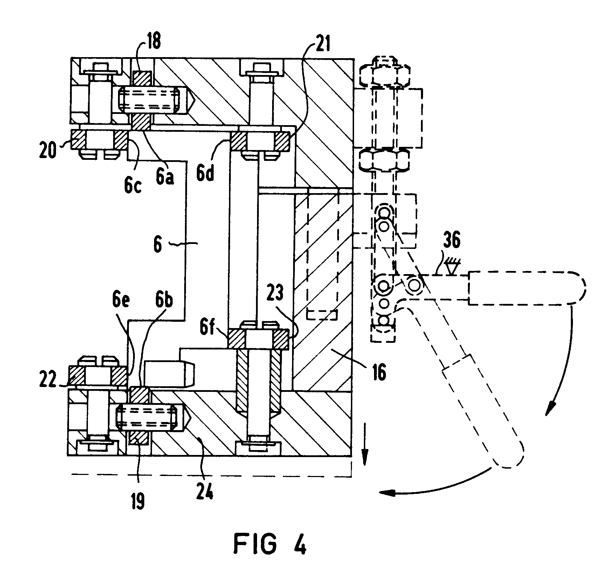

Aus FIG 4, die einen Querschnitt eines Fahrgestells zeigt, ist zu ersehen, daß an der Ringschiene 6, die aus einem hochkant angeordnetem, annähernd U-förmigen Profil gebildet ist, Laufflächen 6a, 6b für obere Laufräder 18 und untere Laufräder 19 vorgesehen sind, die am Fahrgestell 16 gelagert sind. An der Ringschiene 6 befinden sich ferner obere und untere Führungsflächen 6c, 6d, 6e, 6f, denen am Fahrgestell angeordnete Seitenführungsräder 20, 21, 22, 23 zugeordnet sind. Über eine Hubeinrichtung, die zweckmäßigerweise als Kniehebel 36 ausgebildet wird, kann der untere Querträger 24 des Fahrgestells abgesenkt werden, um das Fahrgestell mit wenigen Handgriffen, ohne Werkzeug auf die Ringschiene 6 aufgleisen zu können und die Laufräder sowie Seitenführungsräder mit den Laufflächen bzw. Führungsflächen der Ringschiene in Eingriff zu bringen. Nach dem Aufgleisen der einzelnen Fahrgestelle werden zunächst jeweils zwei Fahrgestelle durch eine Platte 17a bzw. 17b verbunden. Über diese Platten 17a, 17b werden nach Einbringen der Trägerplatte 17 die Fahrgestelle 16 über an sich bekannte Schnellverbindungsglieder 16a zu einem Fahrwerk zusammengefaßt. Dann wird eine Antriebseinheit 25 für die horizontale Bewegung des Fahrgestells 16 montiert und mit einem Antriebsrad des Fahrwerks oder einem Ritzel, das in ein an der Ringschiene montiertes Zahnrad eingreift in drehmomentschlüssige Verbindung gebracht. Die Antriebseinheit 25 ist mit an sich bekannten Schnellbefestigungsmitteln 25a versehen und besteht aus einer einfach zu montierenden Kassette mit Motor, Getriebe und elektronischem Drehgeber.

Eine zweite Antriebseinheit 26, die ebenfalls mit bekannten Schnellbefestigungsmitteln 26a versehen ist, dient zum Einziehen des Mastes, der aus mehreren aneinander anklemmbaren, über an sich bekannte Schnellverschlüsse 27a miteinander kuppelbaren Mastschüssen 27 zusammengesetzt wird.

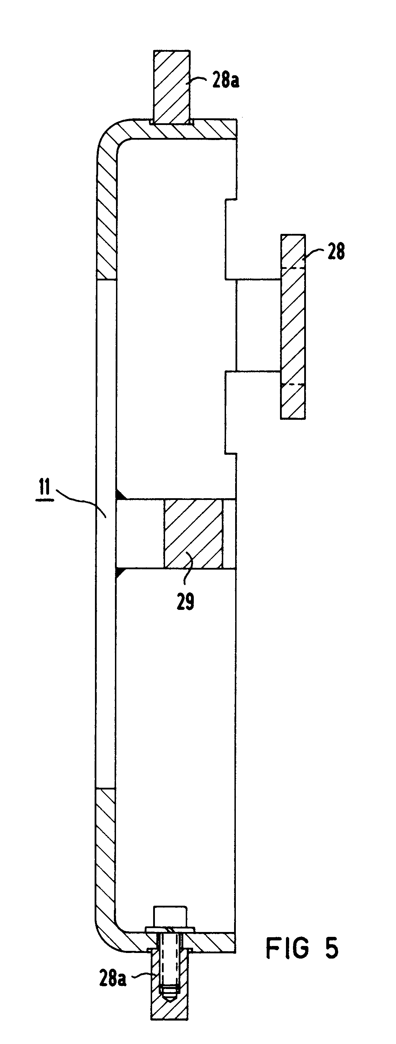

Die einzelnen Mastschüsse 27 weisen ein U-förmiges Profil auf (FIG 5), das mit Führungsleisten 28a für den Mast mit einer Führungsschiene 28 für den Schlitten 12 und in der Mitte mit einer Zahnstange 29 versehen ist. Die einzelnen Mastschüsse 27 werden von unten nacheinander in mit Nuten 6a versehene Führungsplatten 6b des Fahrwerks eingeführt, wobei die Führungsleisten 28a in die Führungsnuten 6g der Führungsplatten eingreifen. Ein Ritzel 30, welches über eine mit der Antriebseinheit 26 verbundene Welle 31 angetrieben wird, übernimmt dabei das Hochziehen der einzelnen Mastschüsse 27 nach dem Ankuppeln an den vorhergehenden Mastschuß. Auf diese Weise wird der Mast Schritt für Schritt aufgebaut und nach oben verfahren.

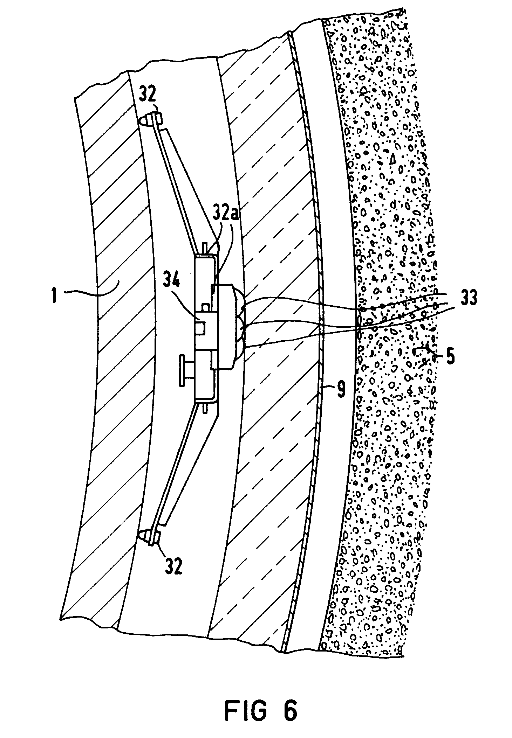

Der oberste Mastschuß trägt, wie FIG 6 zeigt, eine zum Reaktordruckbehälter hin über an sich bekannte Schnellverschlüsse 32a montierte kugelgelagerte Abstützung 32 und/oder eine auf Rollen 33 geführte Mastgegenhalterung als zweite Abstützung und eine Fernsehkamera 34. Die Mastgegenhalterung mit den Rollen 33 ist pneumatisch anstellbar und stützt sich an der Isolierung 5 des Reaktordruckbehälters 1 ab und gewährleistet im Zusammenwirken mit der Abstützung 32 eine schwingungsfreie direkte Auflage der kugelgelagerten Abstützung 32 des Mastes 11 am Reaktordruckbehälter. Dadurch ist ein konstanter Abstand des Mastes und damit des Prüf- oder Wartungssystemträgers gewährleistet.

An dem Mast 11 ist ein Schlitten 12 für einen Prüf- oder Wartungssystemträger 15 verfahrbar (FIG 3). Der Schlitten 12 wird während der Montage des Mastes auf die Führungsschiene 28 des Mastes aufgegleist. Eine am Schlitten 12 angeordnete Antriebseinheit 35 wird über ein Ritzel mit der Zahnstange 29 des Mastes in Eingriff gebracht, so daß der Schlitten 12 vertikal am Mast verfahrbar ist. Der Schlitten 12 trägt einen Prüf- oder Wartungssystemträger 15, einen Wasserverteiler und eine Fernsehkamera. Die Antriebseinheit 35 besitzt an sich bekannte Schnellbefestigungsmittel 35a und ist wiederum als schnell montierbare Antriebskassette ausgebildet, die einen Motor und elektronische Drehgeber besitzt.

Nach einer zweckmäßigen Ausgestaltung ist der Prüf- bzw. Wartungssystemträger 15 auf einem Wagen 14 angeordnet, der auf eine bogenförmige Schiene 13 des Schlittens 12 aufgleisbar und horizontal verfahrbar ist. Hierzu ist der Wagen 14 mit einem in einer Antriebskassette untergebrachten Antriebsmotor 14b und elektronischen Drehgebern 14c ausgerüstet. Antriebsmotor und Drehgeber bilden eine Einheit, die über Schnellbefestigungsmittel 14a montierbar ist.

Zur Prüfung der Rundschweißnaht 2 werden die Bewegungen des Wagens 14 und des Schlittens 12 in der Weise gesteuert, daß der Prüfsystemträger 15 mit den Ultraschallprüfköpfen 15a entlang einer meanderförmigen Bahn 15b über die Schweißnaht 2 geführt werden.

Zur Wartung wird entsprechend ein Wartungssystemträger mit einem Werkzeug entlang einer vorgegebenen Bahn geführt.

Die Bewegung des Manipulators wird von einem Steuerstand mit Positionierelektronik aus ferngesteuert.

**Patentansprüche**

1. Prüf- und Wartungsanordnung für einen zylindrischen Behälter, insbesondere Reaktordruckbehälter, die eine den Behälter (1) in gleichbleibendem Abstand umschließende Ringschiene (6) für einen aus einzelnen Einheiten vor Ort zusammensetzbaren Manipulator (7) umfaßt, der ein längs der Ringschiene (6) verfahrbares Fahrzeug (10) aufweist, an dem ein in den Spalt zwischen Behälter (1) und Isolierung (4) ragender flach ausgebildeter Mast (11) angeordnet ist, an dem ein Schlitten (12) mit einem Prüf- bzw. Wartungssystemträger (15) verfahrbar ist, wobei an dem Mast (11) an seinem freien Ende mindestens eine entlang der Außenwand des Behälters (1) verfahrbare Abstützung (32) angeordnet ist, die durch eine an die Isolierung (4) des Behälters (1) anstellbare Mastgegenhalterung an die Außenwand des Behälters (1) anlegbar ist.

2. Prüfanordnung nach Anspruch 1, bei der das Fahrwerk des Fahr-zeuges (10) über Schnellverbindungsglieder (16a) aus einzelnen Fahrgestellen (16) zusammensetzbar ist.

3. Prüfanordnung nach Anspruch 1, bei der der Mast (11) ein U-Profil aufweist.

4. Prüfanordnung nach Anspruch 1, bei der der Mast (11) aus mehreren durch Schnellverschlüsse (27a) aneinanderreihbaren Mastschüssen (27) zusammensetzbar ist und die einzelnen Mastschüsse (27) in Führungsplatten (6f) des Fahrzeuges (10) einführbar sind.

5. Prüfanordnung nach Anspruch 4, bei der auf das Fahrzeug (10) eine mit Schnellbefestigungsmitteln (26a) versehene Antriebseinheit (26) zum Einziehen der Mastschüsse (27) und Verfahren des Mastes (11) in vertikaler Richtung vorgesehen ist.

6. Prüfanordnung nach einem der Ansprüche 1 bis 5, bei der zum Verfahren des Mastes (11) entlang der Ringschiene (6) auf das Fahrzeug (10) eine mit Schnellbefestigungsmitteln (25a) versehene Antriebseinheit (25) montierbar ist, die einen Motor, ein Getriebe und elektronische Drehgeber enthält.

7. Prüfanordnung nach einem der Ansprüche 1 bis 6, bei der zum Verfahren des Schlittens (12) eine mit Schnellbefestigungsmitteln (26a) versehene Antriebseinheit (26) montierbar ist, die einen Motor, ein Getriebe und elektronische Drehgeber enthält.

**Claims**

1. Test and maintenance arrangement for a cylindrical vessel, in particular a reactor pressure vessel, which comprises an annular rail (6), enclosing the vessel (1) at a constant distance, for a manipulator (7) which can be assembled in situ from individual units and which has a vehicle (10) transportable along the annular rail (6), on which vehicle a pole (11) is arranged, constructed in a flat manner and projecting into the gap between the vessel (1) and the insulation (4), on which pole can be transported a slide (12) with a test and maintenance system carrier (15), whereby at least one support (32) transportable along the outer wall of the vessel (1) is arranged on the pole (11) at its free end, the support being capable of being joined to the outer wall of the vessel (1) by means of a pole counter-hold which can be placed against the insulation (4) of the vessel (1).

2. Test arrangement according to claim 1, in which the travelling gear of the vehicle (10) can be assembled from individual chassis (16) by means of quick-connection elements (16a).

3. Test arrangement according to claim 1, in which the pole (11) has a U-profile.

4. Test arrangement according to claim 1, in which the pole (11) can be composed of several pole sections (27) which can be arranged in series with one another by snap closures (27a) and the individual pole sections (27) can be inserted into guide plates (6f) of the vehicle (10).

5. Test arrangement according to claim 4, in which a drive unit (26) is provided on the vehicle (10), the drive unit (26) being provided with quick-fastening means (26a) for retracting the pole sections (27) and transporting the pole (11) in a vertical direction.

6. Test arrangement according to one of claims 1 to 5, in which for the transportation of the pole (11) along the annular rail (6) a drive unit (25) provided with quick-fastening means (25a) can be mounted on to the vehicle (10), the drive unit (25) comprising a motor, a gear unit and electronic rotary transducers.

7. Test arrangement according to one of claims 1 to 6, in which for the transportation of the slide (12) a drive unit (26) provided with quick-fastening means (26a) can be mounted, the drive unit (26) comprising a motor, a gear unit and electronic rotary transducers.

**Revendications**

1. Dispositif de contrôle et de maintenance pour une cuve cylindrique, notamment un caisson sous pression de réacteur, qui comprend un rail annulaire (6) qui entoure à distance constante la cuve (1) et qui est prévu pour un manipulateur (7), qui est assemblé sur place à partir d'unités individuelles et possède un véhicule (10) qui est déplaçable le long du rail annulaire (6) et sur lequel est monté un mât (11) de forme plate, qui pénètre dans la fente présente entre la cuve (1) et l'isolant (4) et sur lequel peut se déplacer un chariot (12) comportant un support (15) pour le système de contrôle et de maintenance, et dans lequel sur l'extrémité libre du mât (11) est disposé au moins un support (32), qui est déplaçable au moins le long de la paroi extérieure de la cuve (1) et peut être appliqué contre la paroi extérieure de la cuve (1), au moyen d'un support antagoniste du mât, pouvant être monté sur l'isolant (4) du récipient (1).

2. Dispositif de contrôle suivant la revendication 1, dans lequel le mécanisme de déplacement du véhicule (10) peut être formé par la réunion de châssis individuels (16) au moyen d'éléments de raccordement rapide (16a).

3. Dispositif de contrôle suivant la revendication 1, dans lequel le mât (11) possède un profil en U.

4. Dispositif de contrôle suivant la revendication 1, dans lequel le mât (11) peut être formé par la réunion de plusieurs éléments de mât (27) reliés les uns aux autres par des dispositifs de fermeture rapide (27a) et que les différents éléments de mit (27) peuvent être insérés dans des plaques de guidage (6f) du véhicule (10).

5. Dispositif de contrôle suivant la revendication 4, dans lequel une unité d'entraînement (26) munie de moyens de fixation rapide (26e), est prévue sur le véhicule (10) pour escamoter les éléments de mât (27) et déplacer le mât (11) dans la direction verticale.

6. Dispositif de contrôle suivant la revendication 1 à 5, dans lequel pour le déplacement du mât (11) le long du rail annulaire (6), une unité d'entraînement (25), qui est munie de moyens de fixation rapide (25a) et contient un moteur, une transmission et des résolveurs électroniques, peut être montée sur le véhicule (10).

7. Dispositif de contrôle suivant l'une des revendications 1 à 6, dans lequel, pour déplacer le chariot (12), on peut monter une unité d'entraînement (26), qui est équipée de moyens de fixation rapide (26a) et contient un moteur, une transmission et des résolveurs électroniques.

FIG 1

FIG 2

FIG 3

FIG 4

28a

28

11

29

28a

FIG 5

FIG 6